**Europäisches Patentamt**

**European Patent Office**

**Office européen des brevets**

(19)

(11) Publication number : **0 315 452 B1**

# EUROPEAN PATENT SPECIFICATION

(12)

(45) Date of publication of patent specification :
08.04.92 Bulletin 92/15

(51) Int. Cl.⁵ : **A21B 3/13,** A47J 37/12, A21B 5/08

(21) Application number : **88310360.8**

(22) Date of filing : **03.11.88**

(54) Method for preparing a food product.

(30) Priority : **05.11.87 GB 8725976**

(43) Date of publication of application :
**10.05.89 Bulletin 89/19**

(45) Publication of the grant of the patent :
**08.04.92 Bulletin 92/15**

(84) Designated Contracting States :
**AT BE CH DE ES FR GB GR IT LI NL SE**

(56) References cited :
GB-A- 2 070 908
US-A- 3 290 154
US-A- 3 552 300
US-A- 3 950 563
US-A- 4 367 243

(72) Inventor : **Barnes, Douglas James**
**9 Stevenson Court**
**St. Neots Huntingdon (GB)**
Inventor : **Bascetta, Emanuele**
**621 Belsize Avenue**
**Springfield Milton Keynes (GB)**
Inventor : **Clarke, Elsie Mary**
**9 Fairfax Road**
**Bedford MK40 4SL (GB)**
Inventor : **Patient, David William**
**44 Woodhead Road**
**Glossop Derbyshire (GB)**

(74) Representative : **Keppels, Willem Richard**
**Engelbertus Gerardus, Drs. et al**
**Unilever N.V. Patent Division P.O.Box 137**
**NL-3130 AC Vlaardingen (NL)**

(73) Proprietor : **UNILEVER PLC**
**Unilever House Blackfriars P.O. Box 68**
**London EC4P 4BQ (GB)**
(84) **GB**

Proprietor : **UNILEVER NV**
**Burgemeester s'Jacobplein 1 P.O. Box 760**
**NL-3000 DK Rotterdam (NL)**
(84) **BE CH DE ES FR GR IT LI NL SE AT**

EP 0 315 452 B1

## Description

This invention relates to a dough product and a method for its preparation, in particular pizza type dough products.

In the past several attempts have been made to obtain pizza products having new shapes and textures.

In US 4 303 677 (The Quaker Oats Company) a process for preparing dish style pizza products having a substantially flat bottom and an upwardly extending rim is described. This method involves repeated pressing of a piece of dough in a dish shaped pan, thereby causing the dough sheet to assume the shape of the pan. This is followed by oven baking the dough in the pan. The disadvantage with this method is that the pizza base formed with a rim will be of a heavy "bready" structure.

GB 1 601 307 describes an alternative method for the preparation of a pizza base. The method comprises deep-frying a sheet of dough while keeping it in contact with a confining means, so as to give a blistered texture but such that the thickness of the whole pizza base is restricted.

GB-A-2,070,908 discloses, like the previous one, deep fat frying a sheet of dough while keeping it in contact with a mesh conveyor, thereby restraining its expansion at random, depending on the size pattern and shape of the meshes and where and how the dough sheet comes into contact with that conveyor.

The object of the present invention is to provide a method for preparing a dough product comprising a partially fried dough sheet which is provided with one or more blistered ridges.

Blistering is the occurrence of rapid expansion of the gas cells of a dough sheet upon a rapid temperature increase. Blistered products contain larger bubbles than the air bubbles formed in the bread structure of a standard oven baked product. It is believed that these large bubbles are responsible for the attractive texture of blistered products.

Moulding dough during development and subsequent baking in moulds enclosing the dough is known as such from US-A-3,290,154 and US-A-3,950,563, however moulds can not be used in practice for frying dough sheets.

Thus, the invention provides a method for preparing a dough product by at least partially frying a dough sheet, which is partly restrained and partly unrestrained, such that upon frying blistering occurs in the unrestrained areas but substantially not in the restrained areas of the dough, the configuration of the unrestrained areas being such that upon frying blistered ridges are formed.

Several types of dough can be used in this method such as bread dough, puff pastry, danish pastry, short crust etcetera. Preferably the dough is of the type which is commonly used in the preparation of pizza bases. These pizza doughs generally comprise a mixture of flour, water, fat, leaving agents and salts.

The dough sheet, after cutting into a preferred shape such as, for instance, a circular disc having a diameter of from 20 to 40 cm, is at least partially fried. During the frying stage the dough sheet is partly restrained, leaving elongate areas of unrestrained dough which allow the formation of blistered ridges. Restraining is such that the formation of large blisters, for instance those having a size of more than 0.2-0.4 cm, preferably more than 1 cm, is avoided in the restrained areas. The formation of small bubbles in the restrained part of the dough may still occur.

Any restraining device such as, for instance, one or more solid bodies or one or more perforated members can be used as long as the restraining device does not prevent heat transfer between the frying medium and the dough products. An example of a suitable restraining device is, for instance, a combination of two plates, the first located beneath the dough sheet and the second located above the dough sheet so that the distance between the two plates is a little, for example 0.2 cm, more than the thickness of the dough sheet to allow some of the frying medium to come in direct contact with the dough sheet. Preferably the first plate has approximately the same diameter as the dough sheet, whereas the second plate is 4 cm smaller in diameter so as to leave a circumferential unrestrained strip adjacent to the edge of the dough sheet. In another embodiment the method may be used to prepare small pizza snack type products having a diameter of less than 20 cm, in which case the second plate of the retraining device would preferably be less than 4 cm smaller in diameter than the dough sheet, such as for example 2 cm smaller.

A particularly useful type of restraining device is a device which comprises substantially flat areas for restraining the dough sheet and at least one raised region extending from the flat area, which allows blistering of the dough in said region during frying. This raised region can also be used to control or limit the height or shape of the blistered ridges.

Preferably, the restraining device is at least partially perforated to effect optimum contact between the dough sheet and frying medium. If a restraining device which comprises raised regions in the blister forming areas is used, it is preferred that the raised regions are perforated and that the restrained areas are not perforated.

For convenience, it is possible that several restraining devices are joined together. Very convenient is the mounting of several restraining devices on a moving conveyor which feeds the dough sheets to be fried through the frying medium.

Preferably the dough sheet is restrained except for a circumferential strip of between 1-3 cm width adjacent to the edge of the dough sheet. Such an arrangement will after frying result in a blistered ridge in the form of a rim having a height of approximately 2 cm, which is preferred for dish type pizza bases.

Preferably the dough comprises a leavening agent, which stimulates the rapid expansion of the gas cells of the dough during frying. Suitable leavening agents are, for instance, yeast and alkali metal bicarbonates.

When preparing a filled pizza, it is preferred to apply the pizza filling after frying. Such pizza fillings often contain a mixture of vegetables such as tomatoes, mushrooms and onions as well as seasoning materials and cheese and/or meat particles. Most preferred is the application of the pizza filling to the areas where no blistered ridges are present.

For long term storage it is preferred to store the final product under frozen conditions. For shorter shelf-life chill storage is possible.

The invention will be further illustrated by means of the following figures and examples -

Figure 1 shows a cross-sectional view of a device for carrying out a method according to the invention.

Figure 2 shows a cross-sectional view of a pizza product prepared according to the invention.

Figure 3 shows a plan view of a pizza product prepared according to the invention.

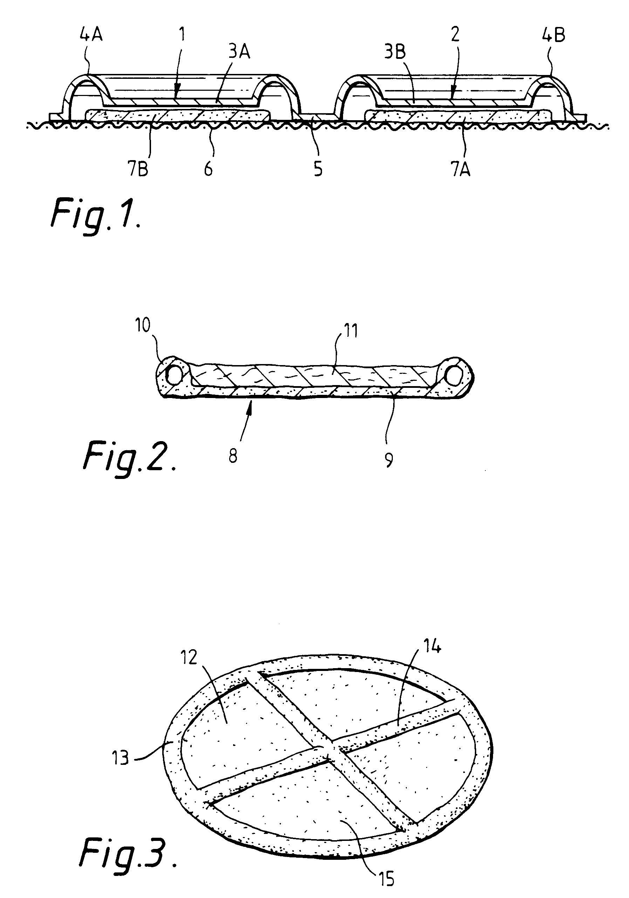

The device in Figure 1 is suitable for producing two dough products by a method according to the invention. It comprises two circular restraining devices 1 and 2. Each device 1, 2 is provided with a flat centre area 3A, 3B and a raised perforated rim 4A, 4B. The two restraining devices 1,2 are linked by a hinge 5 and are mounted on a meshed endless belt 6.

The pizza product in Figure 2 comprises a fried dough sheet 8, having a flat centre 9 and a blistered rim 10. A pizza filling 11 is applied to the flat centre of the pizza.

Figure 3 shows a further pizza product comprising a fried dough sheet 12, having a circumferential blistered ridge 13 and a cross shaped blistered ridge 14, which divides the pizza into four segments. Each segment contains a pizza filling 15 of different composition.

Referring to Figure 1, in use a sheet of dough 7A, 7B is located on the meshed endless belt 6 beneath each restraining device 1, 2. The dough has a thickness which is less than the distance between the circular restraining device 1,2 and the belt 6. The belt 6, carrying the dough sheets and restraining devices passes through a container containing hot oil. During passage through the oil, the dough sheet is fried. Thereafter the belt transports the fried dough sheet and restraining device to a station where the latter is removed. The parfried dough sheet thus prepared has a substantially flat inner centre and an upwardly extending blistered ridge adjacent the circumferential edge of the dough sheet.

Example 1

A pizza dough was prepared by mixing :
100 g     wheatflour
42 g      water
10 g      sunflower oil
9 g       yeast
1.5 g     salt

The dough obtained was rolled out into circular sheets each having a thickness of 0.2 cm and a diameter of 25 cm. Thereafter these were proofed for 5 minutes at 40°C.

Each dough sheet was confined between two circular plates, the first plate having a radius of 30 cm and the second plate a radius of 20 cm. The first plate was located underneath the dough sheet, and the second plate located above the dough sheet, thereby leaving a circumferential strip of 2.5 cm adjacent to the edge of the dough sheet. The distance between the two plates was 0.4 cm.

The restrained dough sheet was fried by deep fat frying in sunflower oil at 195°C for 36 sec. The restraining plates were removed leaving a dough sheet with a substantially flat inner centre, having a thickness of 0.4 cm, and upwardly extending blistered ridge, extending approximately 1 cm above the flat centre and located adjacent the circumferential edge of the dough sheet.

A pizza filling was applied to the upper surface of the parfried product firstly by applying a tomato-sauce to the substantially flat centre, followed by the application of vegetable pieces and cheese particles. The product was subsequently wrapped in a moisture impermeable bag, and stored at -20°C for 3 weeks.

The product was prepared for consumption by heating in a conventional oven for 15 minutes at 200°C to give a heated product having a blistered ridge which is essentially hollow. The product had a tender fried flavour and attractive texture. The presence of the ridge prevented dripping of the pizza filling during heating.

Comparative Example

Circular dough sheets were prepared according to the method as described in Example 1. The dough sheets were confined between two restraining plates as described in Example 1. The product was par-baked in a conventional oven at a temperature of 220°C for 7 minutes. The restraining plates were removed to leave a product with a substantially flat inner centre, having a thickness of 0.4 cm, and an upwardly extending ridge in the form of a rim, which prevented dripping, approximately 4 mm above the flat centre. The rim consisted of a plurality of small air bubbles. Subsequently a pizza filling, as described in Example 1, was applied to the par-baked dough and the product was wrapped in a moisture impermeable bag and stored at -20°C for three weeks.

The product was prepared for consumption by heating in a conventional oven for 15 minutes at 200°C to give heated product having a bready rim containing a number of small air bubbles. This product, prepared without the prefrying step used in Example 1, did not have the tender, crispy blistered ridges of the product prepared according to Example 1.

The pizza dough referred to in Example 1 could also be prepared by replacing at least part of the wheat flour with starch, or using the split feed approach ie. fat coating a portion of the wheat flour before preparing the dough. The dough could also be treated with an enzyme before it is rolled out into sheets.

**Claims**

1. Method for preparing a dough product by at least partially frying a dough sheet which is partly restrained and partly unrestrained such that upon frying blistering occurs in the unrestrained areas but substantially not in the restrained ares of the dough, characterised in that the configuration of the unrestrained areas being such that upon frying blistering ridges are formed.

2. Method according to Claim 1, characterised in that the dough sheet is at least partially fried, while being restrained except for an area adjacent the edge of the sheet.

**Patentansprüche**

1. Verfahren zur Herstellung eines Teigproduktes durch zumindest teilweises Frittieren eines Teigblattes, welches teilweise eingeengt und teilweise nicht eingeengt wird, so daß auf das Frittieren in den nicht eingeengten Bereichen ein Blistern erfolgt, jedoch im wesentlichen nicht in den eingeengten Bereichen des Teiges, dadurch gekennzeichnet, daß die Gestalt der nicht eingeengten Bereiche so ist, daß auf das Frittieren geblisterte Rippen gebildet werden.

2. Verfahren nach Anspruch 1, dadurch gekennzeichnet, daß das Teigblatt mindestens teilweise frittiert wird, während es, ausgenommen in einem an den Rand des Blattes anschließenden Bereich, eingeengt wird.

**Revendications**

1. Méthode pour produire un produit de pâte en faisant frire au moins partiellement une feuille de pâte qui est partiellement restreinte et partiellement non restreinte de telle sorte que pendant la friture un coquillage se produit dans les parties non restreintes de la pâte mais pratiquement pas dans les zones restreintes, caractérisée en ce que la configuration des parties non restreintes est telle qu'au moment de la friture, des rides coquillées sont formées.

2. La méthode en accord avec la Revendication 1, caractérisée en ce que la feuille de pâte est au moins partiellement frite tout en étant restreinte, excepté au niveau d'une partie adjacente au bord de la feuille.

Fig.1.

Fig.2.

Fig.3.